# EUROPÄISCHE PATENTSCHRIFT

(11) **EP 3 702 653 B1**
(45) Veröffentlichungstag und Bekanntmachung des Hinweises auf die Patenterteilung: **18.01.2023**
(21) Anmeldenummer: 19160170.7
(22) Anmeldetag: 01.03.2019
(51) Int. Cl.: F16L 5/02, E04G 15/06, F16L 5/14

(54) **DURCHFÜHRUNGSANORDNUNG ZUM EINBAU IN EIN WAND- ODER BODENELEMENT**
FEED-THROUGH FOR A FLOOR OR CEILING ELEMENT
DISPOSITIF DE TRAVERSÉE DESTINÉ À ÊTRE INTÉGRÉ DANS UN ÉLÉMENT DE MUR OU DE SOL

(43) Veröffentlichungstag der Anmeldung: 02.09.2020
(73) Patentinhaber: Hauff-Technik GmbH & Co. KG, 89568 Hermaringen (DE)
(72) Erfinder: Kurz, Ralf, 89537 Giengen (DE)
(74) Vertreter: König Szynka Tilmann von Renesse Patentanwälte Partnerschaft mbB München

(56) Entgegenhaltungen:
- EP-A1- 2 937 493
- AT-B- 387 835

## Beschreibung

Die vorliegende Erfindung betrifft eine Durchführungsanordnung zum Einbau in ein Wand- oder Bodenelement.

Ein Teil der Durchführungsanordnung ist eine Durchführung, die ein Rohrelement und ein Flanschelement aufweist. Das Flanschelement erhebt sich von dem Rohrelement weg nach außen, und zwar in zu einer Mittenachse des Rohrelements senkrechten Richtungen (im Folgenden "Abstandsrichtungen"). Beim Einbau der Durchführung, wenn diese also bspw. bei der Herstellung einer Betonwand eingegossen wird, kann das Flanschelement als Montagehilfe die Durchführung in Position halten, bis das Vergussmaterial das Rohrelement umschließt. Dazu kann das Flanschelement bspw. an der Schalung, insbesondere einer Schalungsplatte bzw. -tafel befestigt werden.

Die AT 387 835 B betrifft eine Rohrdurchführung, die aus einem Rohrelement und einem Flansch zusammengesetzt wird. Der Flansch kann dabei mit dem Rohrelement verschraubt oder an einen Vorsprung des Rohrelements angeklebt werden.

Die EP 2 937 493 A1 betrifft ebenfalls eine mehrteilig aufgebaute Durchführung, wobei ein härteres Einsetzstück ein weicheres Aufsetzstück abstützt und stabilisiert.

Der vorliegenden Erfindung liegt das technische Problem zugrunde, eine vorteilhafte Durchführungsanordnung anzugeben.

Dies wird erfindungsgemäß mit der Durchführungsanordnung gemäß Anspruch 1 gelöst. Diese weist zusätzlich zu der Durchführung einen Flanschkörper auf, der an das Flanschelement der Durchführung gesetzt ist. In axialer Blickrichtung gesehen ist der Flanschkörper größer als das Flanschelement, er steht gegenüber dem Flanschelement in den Abstandsrichtungen nach außen über. Ferner ist der Flanschkörper zur Versteifung profiliert geformt, hat er also in einem achsparallelen Schnitt betrachtet eine Kontur.

Diese Merkmalskombination kann z. B. dahingehend von Vorteil sein, dass der größere Flanschkörper das Anarbeiten, etwa Aufstreichen bzw. -kleben einer Flächenabdichtung, die auf eine Seitenfläche des Wand- oder Bodenelements aufgebracht wird, vereinfachen kann. Dabei kann es sich bspw. um eine Bitumendickbeschichtung handeln, die auf eine Außenseitenfläche einer Wand aufgebracht wird (gebäudeaußenseitig). Mit dem größeren Flanschkörper lässt sich z. B. ein Überlapp mit der Flächenabdichtung vergrößern und damit die Dichtigkeit der Anbindung verbessern.

Indem der Flanschkörper dabei nicht einfach als plane Platte, sondern profiliert ausgeführt ist, kann auch mit im Verhältnis geringeren Materialstärken ein stabiles Formteil realisiert werden. Eine entsprechende Gewichtsoptimierung kann bspw. die Handhabung bei der Montage betreffend Vorteile bieten. Würde man zum Vergleich eine plane Platte als Flanschelement vorsehen, müsste diese in Anbetracht der Größe des Flanschkörpers vergleichsweise dick sein, um hinreichend Stabilität zu bieten. Eine solche endseitig beschwerte Durchführung könnte dann bei der Montage nach unten verrutschen bzw. seitlich wegkippen.

Bevorzugte Ausgestaltungen finden sich in den abhängigen Ansprüchen und der gesamten Offenbarung, wobei bei der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen. Wird bspw. eine für eine bestimmte Verwendung geeignete Durchführungsanordnung bzw. werden Anwendungsvorteile beschrieben, ist dies auch als Offenbarung einer entsprechenden Verwendung zu lesen, was auch umgekehrt gilt.

Die Angabe "axial", sowie die "Axialrichtung" beziehen sich auf die Mittenachse des Rohrelements; entlang dieser erstreckt sich die Rohröffnung des Rohrelements. Das Rohrelement kann um die Mittenachse dreh- und im bevorzugten Fall eines kreisförmigen Querschnitts rotationssymmetrisch sein, die Mittenachse ist also eine entsprechende Symmetrieachse. In den zur Mittenachse senkrechten Abstandsrichtungen wird der Abstand von der Mittenachse genommen, sie entsprechen den Radialrichtungen im Falle der Kreisform. Ohne ausdrücklich gegenteilige Angabe meint "nach außen" von der Mittenachse weg, und "nach innen" zu der Mittenachse hin.

Das Rohrelement kann in der Axialrichtung mehrteilig aufgebaut, also aus mehreren Rohrstücken zusammengesetzt sein. Bevorzugt ist ein an dem Flanschelement angeordnetes Rohrstück des Rohrelements einstückig mit dem Flanschelement geformt, besonders bevorzugt monolithisch (dieses Rohrstück kann dann für sich oder zusammen mit weiteren Rohrstücken das Rohrelement bilden). "Einstückig" meint nicht zerstörungsfrei voneinander trennbar, bspw. als ZweiKomponenten-Spritzgußteil hergestellt oder fügeverbunden. "Monolithisch" meint ohne Materialgrenze im Inneren geformt (von statistisch verteilten Einschlüssen abgesehen), bspw. als eine Komponente spritzgegossen. Das Flanschelement ist bevorzugt axial endseitig an dem Rohrelement angeordnet, was bspw. im Falle eines Wandelements die Montage an der Schalung vereinfachen kann (keine Aussparung erforderlich).

Die Kombination aus Flanschelement und zur Vergrößerung angesetztem Flanschkörper kann z. B. dahingehend von Vorteil sein, dass das kleinere Flanschelement stabil am Rohrelement sitzt und damit auch für den Flanschkörper eine gewisse Stabilität schaffen kann. Der Aufbau aus zusammengesetzten Teilen kann auch eine Modularität eröffnen, es kann bspw. eine baugleiche Durchführung in einer anderen Anwendung ohne Flanschkörper in das Wand- oder Bodenelement eingebaut werden, wenn z. B. mehrere Durchführungen möglichst kompakt nebeneinander angeordnet werden sollen (große Flanschelemente könnten dann nachteilig sein, weil sie entsprechende Mindestabstände vorgeben). Damit kann der Flanschkörper für ein Bauteil (die Durchführung) unterschiedliche Anwendungen eröffnen. Unabhängig von der Einbausituation der Durchführung (mit/ohne Flanschkörper) kann durch diese dann eine Leitung hindurchgeführt werden; die Verwendung baugleicher Durchführungen kann dabei insoweit von Vorteil sein, als dann das gleiche Dichtsystem zur Abdichtung der Durchführung gegen die Leitung Anwendung finden kann.

Die Durchführung weist bevorzugt einen Verschluss auf, der weiter bevorzugt endseitig in dem Rohrelement sitzt und dieses z. B. während des Einbaus in das Wand- oder Bodenelement verschließt. Bevorzugt ist ein zu dem Rohrelement mehrteiliger, reversibel herausnehm- und wiedereinsetzbarer Verschlussdeckel, der bspw. über einen Schraub- und/oder Bajonettmechanismus in dem Rohrelement gehalten ist. Bevorzugt kann derselbe Schraub- und/oder Bajonettmechanismus dann ein eben erwähntes Dichtsystem zum Abdichten gegen die Leitung aufnehmen.

Das Flanschelement erhebt sich von dem Rohrelement weg nach außen, bevorzugt ist es umlaufend (bezogen auf einen Umlauf um die Mittenachse) in sich geschlossen, also unterbrechungsfrei durchgehend (von z. B. Öffnungen zur Befestigung an der Schalung abgesehen). In axialer Richtung betrachtet ist das Flanschelement mit einem mit der Rohröffnung fluchtenden Loch vorgesehen. Das Loch im Flanschelement hat einen dem Rohrelement entsprechenden Querschnitt. Dieses könnte zwar im Allgemeinen auch mit einem monolithisch angeformten, über Sollbruchstellen austrennbaren Verschluss verschlossen sein, bevorzugt ist auf axialer Höhe des Flanschelements jedoch ein reversibel herausnehm-/einsetzbarer Verschluss angeordnet, siehe vorne.

Im Allgemeinen könnte der Flanschkörper z. B. auch aus einem dünnen Metallblech geformt sein, das aufgrund der Profilierung dennoch hinreichend stabil wäre. Ein solcher Flanschkörper könnte bspw. als Tiefziehteil hergestellt werden. In bevorzugter Ausgestaltung ist der Flanschkörper jedoch aus einem Kunststoffmaterial vorgesehen. Ein entsprechendes Formteil ließe sich bspw. auch spritzgießen, es könnten z. B. an einer axialen Seite des Flanschkörpers angeordnete Versteifungsrippen die Profilierung bilden.

Generell hat zumindest eine axiale Seitenwandfläche (Stirnseitenfläche) des "profiliert geformten" Flanschkörpers in zur Mittenachse parallelen Schnittebenen betrachtet einen unebenen, also nicht planen Verlauf. Im Schnitt betrachtet erstreckt sich die Seitenwandfläche also jedenfalls abschnittsweise mit einer Axialkomponente. Bevorzugt betrifft dies zumindest die dem Rohrelement zugewandte Seitenwandfläche des Flanschkörpers, die bspw. im Falle eines Spritzgussteils mit Versteifungsrippen geformt sein kann. Besonders bevorzugt ist die axial entgegengesetzte, dem Rohrelement abgewandte Seitenwandfläche mit einem komplementären Verlauf geformt. Ist die eine Seitenwandfläche in einem Bereich konvex geformt, so ist die entgegengesetzte Seitenwandfläche dort konkav geformt (und umgekehrt). Generell besteht die Profilierung bevorzugt jedenfalls auch in einigen die Mittenachse beinhaltenden Schnittebenen, z. B. jedenfalls für entsprechende Schnittebenen in einem aufsummierten Umlaufwinkelbereich von mindestens 180° bzw. 270°, besonders bevorzugt für sämtliche die Mittenachse beinhaltenden Schnittebenen (360°).

Der Flanschkörper ist in bevorzugter Ausgestaltung ein Thermoformteil. Er kann insbesondere aus einem thermoplastischen Kunststoff vorgesehen sein, der zur Formgebung erwärmt und dann bspw. durch Überdruck (z. B. Druckluft) und/oder Unterdruck in das Formwerkzeug gedrückt bzw. gezogen wird (in axialer Richtung). Ein Vorteil hierbei kann z. B. darin liegen, dass sich damit auch vergleichsweise dünne Wandstärken realisieren lassen, was hinsichtlich der gewünschten Gewichtsoptimierung vorteilhaft sein kann.

Generell hat der Flanschkörper bevorzugt eine Wandstärke von höchstens 8 mm, 6 mm, 5 mm, 4 mm bzw. 3 mm (in der Reihenfolge der Nennung zunehmend bevorzugt); mögliche Untergrenzen können bspw. bei mindestens 1 mm bzw. 2 mm liegen. Die Wandstärke (Wanddicke) wird in axialer Richtung in einem Flanschabschnitt des Flanschkörpers genommen. An den Flanschabschnitt kann in der Anwendung bspw. die Flächenabdichtung angearbeitet werden, beim Einbau bzw. Vergießen der Durchführungsanordnung kann er an einer Schalung anliegen. Besonders bevorzugt können die genannten Wandstärken im Falle eines Thermoformteils sein.

In einer jeweiligen Abstandsrichtung kann der Flanschkörper bspw. um mindestens 2 cm, 3 cm, 4 cm bzw. 5 cm gegenüber dem Flanschelement nach außen überstehen, mögliche Obergrenzen können bspw. bei höchstens 40 cm, 30 cm bzw. 20 cm liegen. Bevorzugt wird ein entsprechender Überstand, der z. B. ein gutes Anarbeiten der Flächenabdichtung ermöglichen kann, in jeder der Abstandsrichtungen erreicht. Der gegenüber dem Flanschelement der Durchführung überstehende Teil des Flanschkörpers wird vorliegend auch als "Flanschabschnitt" bezeichnet, siehe vorne. Um die Mittenachse umlaufend ist der Flanschabschnitt bevorzugt unterbrechungsfrei, also durchgehend ausgebildet.

Gemäß einer bevorzugten Ausführungsform weist der Flanschkörper einen Rohrstutzen auf, und es sind dieser Rohrstutzen und das Rohrelement der Durchführung ineinandergesetzt. Dies kann eine Stabilität schaffen, es lässt sich bspw. einem Verkippen bzw. -rutschen des Flanschkörpers vorbeugen, etwa im Vergleich zu einem allein über das Flanschelement an der Durchführung gehaltenen Flanschkörper. Das "Ineinandergesetztsein" meint, dass das Eine innerhalb des Anderen angeordnet ist (bezogen auf die Abstandsrichtungen), bevorzugt das Rohrelement in dem Rohrstutzen.

Der Rohrstutzen ist einstückig, besonders bevorzugt monolithisch mit dem übrigen Flanschkörper vorgesehen, insbesondere mit dessen Flanschabschnitt. Der Rohrstutzen kann sich axial bspw. über mindestens 1/4, 1/3, 1/2 bzw. 2/3 der axialen Länge des gesamten Flanschkörpers erstrecken, mögliche Obergrenzen können bspw. bei höchstens 9/10 bzw. 4/5 liegen. In absoluten Werten kann es sich bspw. über mindestens 1 cm, 2 cm bzw. 3 cm erstrecken, mit möglichen Obergrenzen bei z. B. höchstens 20 cm bzw. 15 cm. Eine gewisse axiale Erstreckung schafft Stabilität, eine Obergrenze kann bspw. mit Blick auf die Geometrie des Rohrelements oder die Handhabbarkeit von Interesse sein.

In bevorzugter Ausgestaltung sind der Flanschkörper und die Durchführung über eine Fügeverbindung miteinander verbunden, vorzugsweise sind sie miteinander verklebt. Die Füge- bzw. Klebeverbindung könnte im Allgemeinen auch direkt zwischen dem Flanschkörper und dem Flanschelement ausgebildet sein, es könnte also das Flanschelement an den Flanschkörper geklebt sein. Mit der Fügeverbindung sind der Flanschkörper und die Durchführung bevorzugt nicht nur aneinander befestigt, sondern auch gegeneinander gedichtet. Mit dem Anarbeiten der Flächendichtung an den Flanschabschnitt kann damit eine durchgehende Abdichtung bis zum Innenvolumen des Rohrelements geschaffen werden, dieses wird dann bspw. später mit einem eingesetzten Dichtsystem gegen eine hindurchgeführte Leitung gedichtet, siehe unten.

In bevorzugter Ausgestaltung ist die Füge- bzw. Klebeverbindung zwischen dem Rohrstutzen des Flanschkörpers und dem Rohrelement der Durchführung ausgebildet. Dies kann bspw. insoweit von Vorteil sein, als die Rohrteile von der Krümmung abgesehen vergleichsweise glatte Oberflächen bieten können, bspw. im Vergleich zu dem Flanschelement bzw. Flanschabschnitt des Flanschkörpers (z. B. aufgrund von Verstärkungsrippen dort). Da die Klebeverbindung weiter innen angeordnet ist, kann bspw. auch in einer verringerten Klebstoffmenge ein Vorteil liegen (geringerer Radius). Die Füge- bzw. Klebeverbindung besteht zwischen der Innenwandfläche des einen Teils und der Außenwandfläche des anderen. Im bevorzugten Fall des in den Rohrstutzen eingesetzten Rohrelements ist sie zwischen der Innenwandfläche des Rohrstutzens und der Außenwandfläche des Rohrelements angeordnet.

Erfindungsgemäß bildet der Flanschkörper eine Vertiefung, in welcher das Flanschelement der Durchführung angeordnet ist. Die Vertiefung erstreckt sich axial in den Flanschkörper und wird dabei nach außen, in den Abstandsrichtungen vom Flanschkörper eingefasst (bevorzugt vollständig umlaufend, also in sämtlichen Abstandsrichtungen). Der Flanschkörper begrenzt die Vertiefung auch axial (von einer mit dem Rohrelement axial fluchtenden Öffnung abgesehen), in der entgegengesetzten axialen Richtung ist die Vertiefung offen. Von dort kommend ist das Flanschelement bzw. wird es beim Zusammensetzen eingesetzt.

Erfindungsgemäß weist die Öffnung axial vom Rohrelement der Durchführung weg, ist sie also dem Rohrelement abgewandt offen. Axial auf die Seitenwandfläche des Wand- oder Bodenelements blickend, an welcher der Flanschabschnitt des Flanschkörpers angeordnet ist, sind dann also sowohl das Flanschelement als auch der Flanschabschnitt des Flanschkörpers sichtbar (letzterer verdeckt das Flanschelement nicht). Im Falle eines Flanschkörpers mit Rohrstutzen (siehe vorne) ist bei einer solchen Anordnung das Rohrelement der Durchführung in dem Rohrstutzen angeordnet. Beim Zusammensetzen wird das Rohrelement in den Rohrstutzen eingeschoben, bis das Flanschelement in der Vertiefung des Flanschkörpers zu liegen kommt.

In bevorzugter Ausgestaltung sitzt das Flanschelement derart in der Vertiefung, dass eine axiale Stirnseitenfläche des Flanschelements axial bündig mit einer axialen Stirnseitenfläche des Flanschabschnitts des Flanschkörpers liegt. Im bevorzugten Fall eines Wandelements können dann sowohl der Flanschkörper als auch das Flanschelement mit der jeweiligen Stirnseitenfläche an der Schalung anliegen, bevorzugt liegt auch ein endseitig in dem Rohrelement angeordneter Verschluss bzw. Verschlussdeckel (siehe oben) an der Schalung an. Indem nicht nur der Flanschkörper mit seinem Flanschabschnitt, sondern aufgrund der Platzierung in der Vertiefung auch die Durchführung an der Schalung anliegt, wird zumindest ein größerer Hohlraum an der Schalung vermieden. Damit kann bspw. einem Einlaufen von Vergussmaterial vorgebeugt werden, bspw. von Beton bzw. Betonmilch.

Gemäß einer bevorzugten Ausführungsform springt ein Außenrand des Flanschkörpers, der bezogen auf die Abstandsrichtungen außen liegt, gegenüber einer Stirnseitenfläche des Flanschabschnitts axial zurück, bspw. um mindestens 5 mm, 10 mm bzw. 15 mm, mit möglichen Obergrenzen bei z. B. höchstens 10 cm bzw. 8 cm. Entsprechend liegt der Flanschkörper dann mit besagtem Außenrand nicht an dem Schalungselement an. Der axial zurückspringende Außenrand kann bspw. hinsichtlich der Stabilität von Vorteil sein, er kann die Profilierung bzw. einen Teil davon schaffen. Bevorzugt hat er auch eine anteilige Erstreckung nach innen oder besonders bevorzugt außen (von der Mittenachse weg), sodass er axial formschlüssig in dem Vergussmaterial gehalten wird.

Bei einer bevorzugten Durchführungsanordnung ist der Flanschkörper mit mehreren Durchführungen zusammengesetzt. Auch die weitere(n) Durchführung(en) weist bzw. weisen jeweils ein Rohrelement mit einem Flanschelement auf, vergleiche die obigen Anmerkungen zur möglichen Ausgestaltung der Durchführung. Die Flanschelemente der Durchführungen sind nebeneinandergesetzt (in Abstandsrichtung aufeinanderfolgend angeordnet), es ist eine Anordnung in Zeilen-, aber auch Matrixform möglich. Der Flanschkörper fast die Flanschelemente dann insgesamt ein, erstreckt sich also um die zusammengesetzten Flanschelemente umlaufend. Bevorzugt ist jede der Durchführungen über eine jeweilige Fügeverbindung gegen den Flanschkörper gedichtet, vorzugsweise jeweils zwischen Rohrelement und einem jeweiligen Rohrstutzen.

Das Zusammenfassen der Durchführungen mit genau einem Flanschkörper kann bspw. hinsichtlich eines raumsparenden Aufbaus von Vorteil sein (verglichen mit dem Nebeneinandersetzen mehrerer Flanschkörper mit jeweils genau einer Durchführung). Andererseits kann speziell die vorliegende, gewichtsoptimierte Gestaltung des Flanschkörpers einen größeren Flanschkörper für mehrere Durchführungen ermöglichen, der dann trotzdem noch gut handhabbar bleibt. Insgesamt können bspw. maximal 25, 20 bzw. 15 Durchführungen mit einem gemeinsamen Flanschkörper zusammengefasst werden (mögliche Untergrenzen liegen bspw. bei mindestens 2, 3 oder 4).

Gemäß einer bevorzugten Ausführungsform weist das Flanschelement der Durchführung ein Formschlusselement auf, über welches die Durchführung mit einer anderen Durchführung formschlüssig zusammenbaubar ist. Im Falle einer Durchführungsanordnung mit nur genau einer Durchführung kann dieses Formschlusselement ungenutzt bleiben, bei der eben diskutierten Variante mit mehreren Durchführungen sind diese bevorzugt über ihre Flanschelemente formschlüssig zusammengebaut. Das Formschlusselement kann bevorzugt doppelt als ein erstes und ein dazu komplementäres zweites Formschlusselement vorgesehen sein; bevorzugt sind die Flanschelemente baugleich, lässt sich also mit nur einem Flanschelementtyp ein Modul aufbauen. Es wird auf die vorstehenden Anmerkungen zur Modularität verwiesen, die mit dem Flanschkörper eröffnet bzw. erweitert wird.

Die Erfindung betrifft auch einen Satz mehrerer Durchführungsanordnungen, wobei deren Durchführungen untereinander baugleich sind, sich jedoch die Flanschkörper unterscheiden. Die Flanschkörper können bspw. für eine unterschiedliche Anzahl Durchführungen ausgelegt sein. So kann der eine Flanschkörper bspw. mit genau einer Durchführung zusammengesetzt sein, also mit genau einem Flanschelement. Der bzw. die anderen Flanschkörper können hingegen für mehrere Durchführungen ausgelegt sein, also analog der vorstehenden Schilderung jeweils mindestens zwei Flanschelemente zusammenfassen.

Alternativ oder zusätzlich zu dem Unterschied in der Anzahl an an- bzw. eingesetzten Durchführungen können sich die Flanschkörper bspw. auch in ihren Flanschabschnitten unterscheiden. Die Flanschabschnitte können z. B. unterschiedlich bemessen sein, sich also unterschiedlich weit nach außen erstrecken (in den Abstandsrichtungen). Die Flanschkörper können also bspw. auch jeweils für genau eine Durchführung ausgelegt sein, aber unterschiedlich große Flanschabschnitte haben, die an unterschiedliche Flächendichtungen angepasst sein können.

Die Erfindung betrifft auch die Verwendung einer vorliegend offenbarten Durchführungsanordnung zum Einbau in ein Wand- oder Bodenelement. Dies erfolgt bevorzugt durch Vergießen mit einem zunächst fließfähigen Vergussmaterial, welches das Rohrelement der Durchführung umschließt und aushärtet. Die Durchführung und auch der Hohlkörper verbleiben in dem Wand- oder Bodenelement, sind also bspw. Noch in dem gehärteten Vergussmaterial angeordnet, wenn durch das Rohrelement eine Leitung hindurchverlegt wird. Bevorzugt erfolgt der Einbau im Zuge der Herstellung des Wand- oder Bodenelements, wird die Durchführungsanordnung also beim Gießen des Wand- oder Bodenelements mit eingegossen. Der Gegenstand betrifft bevorzugt ein Wandelement, besonders bevorzugt eine Gebäudewand. Das Vergussmaterial ist bevorzugt Beton, die Durchführungsanordnung wird also insbesondere in eine Gebäudewand aus Beton eingegossen. Bei der Gebäudewand kann es sich bspw. um eine Außenwand handeln.

In bevorzugter Ausgestaltung wird auf eine Seitenfläche des Wand- oder Bodenelements, insbesondere der Betonwand, nach dem Einbau der Durchführungsanordnung eine Flächenabdichtung aufgebracht. Diese wird an den Flanschkörper, insbesondere dessen Flanschabschnitt, angearbeitet, vorzugsweise aufgestrichen. Bevorzugt wird eine entsprechende Anbindung zwischen Flanschkörper und Flächendichtung vollständig umlaufend hergestellt. Bei der Flächendichtung kann es sich vorzugsweise um eine Bitumendickbeschichtung handeln, siehe vorne.

Bei der Leitung kann es sich im Allgemeinen bspw. auch um eine Medienleitung handeln, wie z. B. eine Gas-, Wasser- oder Fernwärmeleitung, also ein Hohlrohr, in dem das entsprechende Medium geführt wird. Bevorzugt kann die Leitung ein Kabel sein, z. B. ein Datenkabel oder bevorzugt ein Elektrokabel.

Die Leitung kann dann mit einem Dichtsystem gegen die Durchführung gedichtet werden. Das Dichtsystem kann bspw. eine Schrumpfhülse umfassen, die sich an eine Außenfläche der Leitung legt (durch Warm- oder Kaltschrumpfen). Eine solche Schrumpfhülse kann bspw. an einem Systemdeckel angeordnet sein, der dann z. B. anstelle des Verschlussdeckels in das Rohrelement gesetzt wird. Generell kann bevorzugt sein, dass das Dichtsystem über denselben Befestigungsmechanismus in dem Rohrelement befestigt wird, über den davor (beim Eingießen) ein Verschlussdeckel im Rohrelement gehalten wird. Das Dichtsystem und der Verschlussdeckel können also bspw. über denselben Schraub- und/oder Bajonettmechanismus in dem Rohrelement befestigt werden.

Das Dichtsystem kann bspw. auch über eine Pressdichtung realisiert sein, also einen Elastomerkörper, der zwischen Presskörpern axial gestaucht wird und sich infolgedessen nach innen und außen dichtend anlegt. Eine solche Pressdichtung kann bspw. in einem Ringeinsatz angeordnet sein bzw. eingesetzt werden, dieser kann wiederum analog dem Verschlussdeckel in dem Rohrelement befestigt werden (insbesondere über einen Schraub- und/oder Bajonettmechanismus). Die Pressdichtung kann auch in Umlaufrichtung segmentiert ausgeführt, also bspw. aus mehreren Kreissegmenten aufgebaut sein; bevorzugt kann dann auch der Ringeinsatz die Durchgangsöffnung der Segmentierung entsprechend unterteilen (mit Stegen).

Im Folgenden wird die Erfindung anhand eines Ausführungsbeispiels näher erläutert, wobei die einzelnen Merkmale auch in anderen Kombinationen erfindungswesentlich sein können und sich, wie bereits erwähnt, implizit auf alle Kategorien der Erfindung beziehen.

Im Einzelnen zeigt
- Figur 1: eine erfindungsgemäße Durchführungsanordnung mit einer Durchführung und einem Flanschkörper in einer Schrägansicht von vorne;
- Figur 2: die Durchführung der Anordnung gemäß Figur 1, wobei das Rohrelement der Durchführung ohne Verschlussdeckel dargestellt ist;
- Figur 3: den Flanschkörper der Durchführungsanordnung gemäß Figur 1 in einer Schrägansicht von vorne;
- Figur 4: den Flanschkörper gemäß Figur 3 in einer geschnittenen Detaildarstellung;
- Figur 5: die Durchführungsanordnung gemäß Figur 1 in einer Seitenansicht, in einer schematisch dargestellten Einbausituation;
- Figur 6: eine weitere erfindungsgemäße Durchführungsanordnung, wobei mit einem Flanschkörper vier Durchführungen zusammengesetzt sind;
- Figur 7: den Flanschkörper der Durchführungsanordnung gemäß Figur 6 in einer Einzeldarstellung;
- Figur 8: den Flanschkörper gemäß Figur 7 in einer Rückansicht;
- Figur 9: die Durchführungsanordnung gemäß Figur 6 in einer Seitenansicht.

### Bevorzugte Ausführung der Erfindung

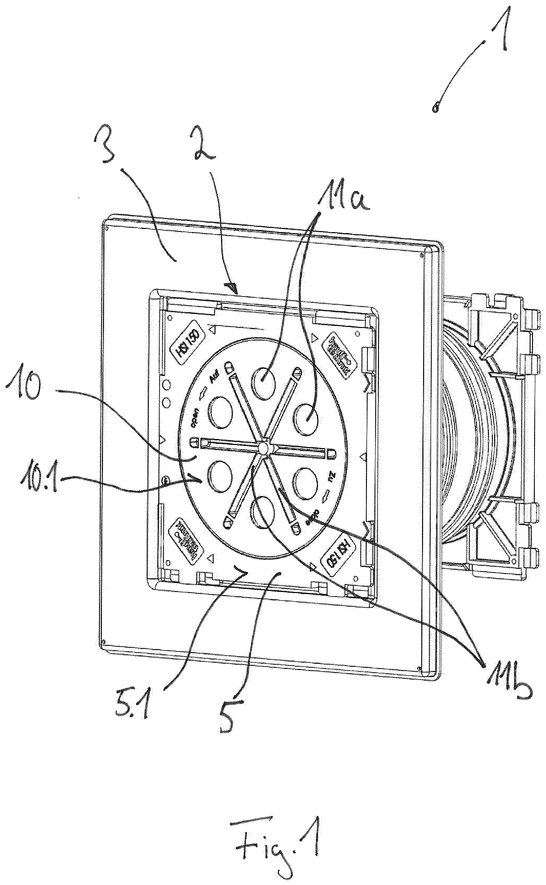

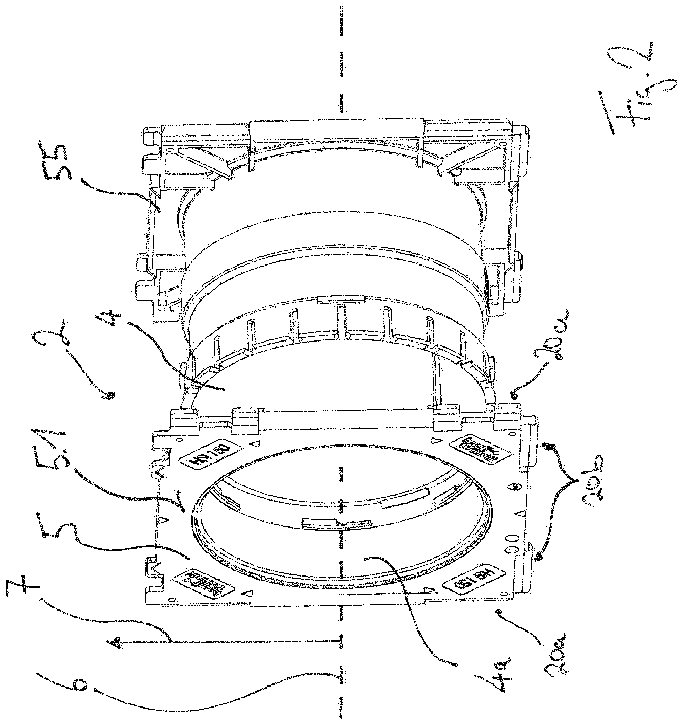

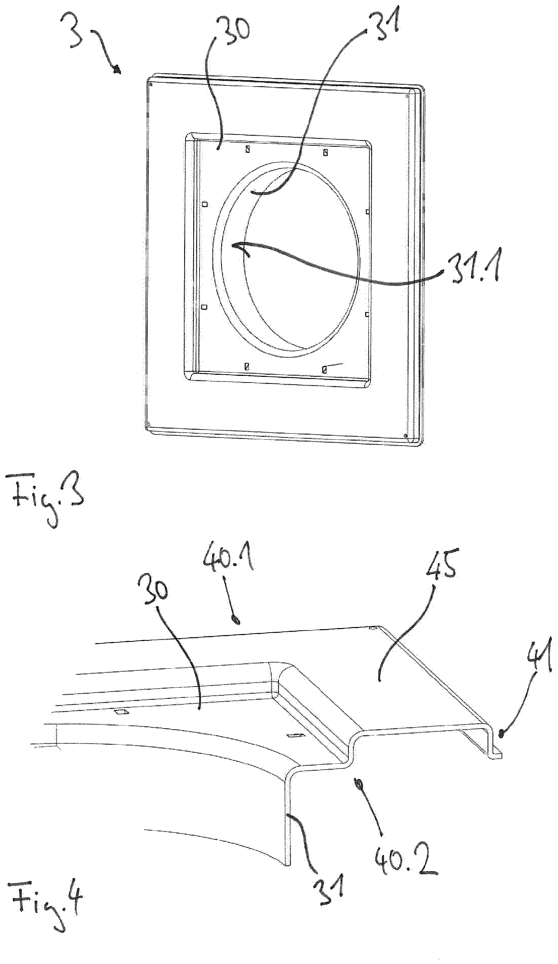

**Figur 1** zeigt eine Durchführungsanordnung 1 in einer Schrägansicht von vorne. Diese weist eine Durchführung 2 und einen Flanschkörper 3 auf. Ergänzend wird auch auf **Figur 2** verwiesen, welche die Durchführung 2 in einer Einzeldarstellung, also ohne den Flanschkörper 3 zeigt (der Flanschkörper 3 wird im Detail anhand der Figuren 3 und 4 diskutiert).

Die Durchführung 2 weist ein Rohrelement 4 und ein Flanschelement 5 auf, das bezogen auf eine Mittenachse 6 des Rohrelements 4 axial endseitig an dem Rohrelement 4 angeordnet ist. In zu der Mittenachse 6 senkrechten Abstandsrichtungen 7 erhebt sich das Flanschelement 5 von dem Rohrelement 4 weg nach außen (der Übersichtlichkeit halber ist nur eine Abstandsrichtung 7 gezeigt). Im Einzelnen setzt sich das Rohrelement 4 aus mehreren Rohrelementteilstücken zusammen (nicht im Einzelnen referenziert), wobei ein axial endseitiges Rohrelementteilstück 4a monolithisch mit dem Flanschelement 5 geformt ist.

**Figur 3** zeigt den Flanschkörper 3 in einer Einzeldarstellung, also ohne die Durchführung 2. Zu erkennen ist eine Vertiefung 30, die sich axial in den Flanschkörper 3 hinein erstreckt und in zusammengesetzter Form das Flanschelement 5 der Durchführung 2 aufnimmt, vergleiche die Zusammenschau mit Figur 1. Der Flanschkörper 3 weist ferner einen Rohrstutzen 31 auf, der im zusammengesetzten Zustand das Rohrelement 4 der Durchführung 2 aufnimmt. Dabei wird zwischen einer Innenwandfläche 31.1 des Rohrstutzens 31 und einer Außenwandfläche des Rohrelements 4 eine Klebeverbindung hergestellt. Diese dient der Fixierung und dichtet zugleich den Flanschkörper 3 und die Durchführung 2 gegeneinander.

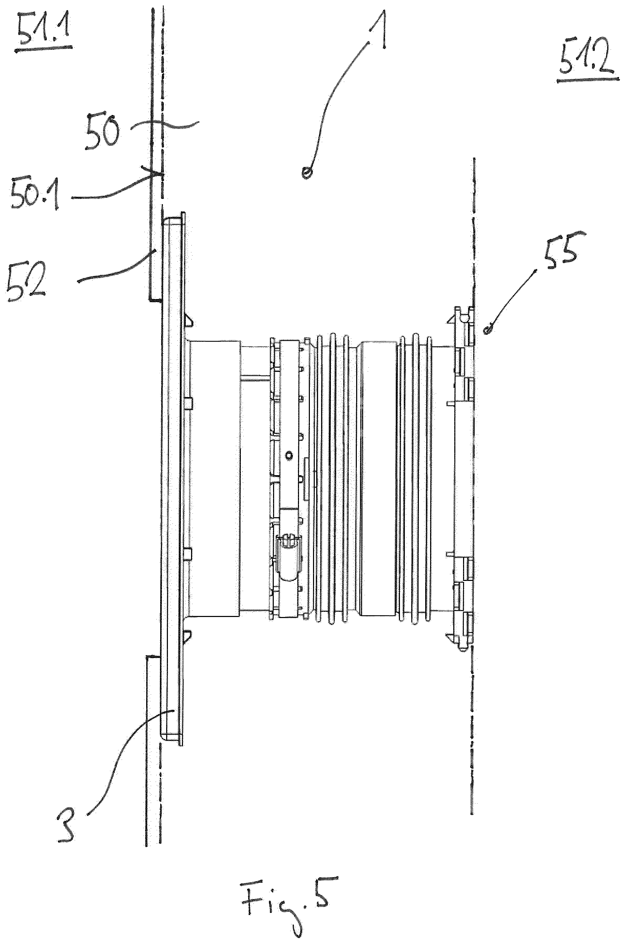

**Figur 4** zeigt den Flanschkörper 3 in einer Detailansicht, und zwar in einem achsparallelen Schnitt. Dieser lässt die Profilierung, also abschnittsweise axiale Erstreckung der beiden Seitenwandflächen 40.1, 40.2, des Flanschkörpers 3 erkennen. Die Profilierung verleiht dem Flanschkörper 3 trotz der vergleichsweise dünnwandigen Ausgestaltung eine gute mechanische Stabilität. Da der Flanschkörper 3 ein Thermoformteil ist, sind die einander entgegengesetzten Seitenwandflächen 40.1, 40.2 komplementär geformt. Die Abschnitte mit axialer Erstreckung ergeben sich bspw. durch die Vertiefung 30 und auch durch den axial zurückspringenden Außenrand 41. Dieser kragt zusätzlich nach außen aus, was hinsichtlich des Einbetonierens von Vorteil ist, nämlich einen Hinterschnitt schafft, vgl. Figur 5.

**Figur 5** illustriert die Durchführungsanordnung 1 in einer Einbausituation, also nach dem Eingießen in ein schematisch gezeigtes Wand- oder Bodenelement 50, vorliegend eine Betonwand. Während des Einbetonierens liegt die Durchführungsanordnung 1 mit dem Flanschelement 5 und einem außerhalb davon angeordneten Flanschabschnitt 45 (vergleiche Figur 4 zur Illustration) an der Schalung an, also bei der Ausrichtung gemäß Figur 5 an einem auf der linken Seite angeordneten Schalungselement (das aber in Figur 5 bereits wieder entfernt wurde). Da das Flanschelement 5 in der Vertiefung 30 sitzt, liegen eine Stirnseitenfläche 5.1 des Flanschelements 5 und die Stirnseitenfläche 40.1 des Flanschabschnitts 45 des Flanschkörpers 3 axial auf derselben Höhe. Es gibt also keinen Hohlraum an der Schalung, in den Beton bzw. Betonmilch einlaufen könnte. Beim Vergießen der Durchführungsanordnung 1 ist das Rohrelement 4 mit einem Verschlussdeckel 10 verschlossen, vergleiche Figur 1 zur Illustration. Auch dessen Stirnseitenfläche 10.1 liegt axial auf derselben Höhe. Von Vertiefungen 11a zum Hineingreifen bzw. Vertiefungen 11b zum Ansetzen eines Werkzeugs abgesehen liegt damit die gesamte Durchführungsanordnung 1 weitgehend hohlraumfrei an der Schalung an.

Figur 5 zeigt die Situation nach dem Vergießen, die Schalungselemente wurden nach einem Härten des Betons also bereits entfernt. Bei der Betonwand handelt es sich um eine Gebäudewand, konkret eine Gebäudeaußenwand. In Figur 5 liegt die Gebäudeaußenseite 51.1 links, die Gebäudeinnenseite 51.2 rechts. Zur Abdichtung wird auf eine der Gebäudeaußenseite 51.1 zugewandte Seitenfläche 50.1 eine Flächendichtung 52 aufgebracht, vorliegend eine Bitumendickbeschichtung. Hierfür bietet der Flanschkörper 3 vorteilhafterweise eine große Anschlussfläche, die Bitumendickbeschichtung kann umlaufend mit einem großen Überlapp aufgestrichen werden, was einen zuverlässigen Anschluss und damit eine gute Dichtigkeit ergibt.

Generell kann ein Vorteil der Kombination aus Flanschkörper 3 und Flanschelement 5 bspw. auch in einer Modularität liegen. Ist keine Flächendichtung erforderlich, wie bspw. auf der Gebäudeinnenseite 51.2, kann die Durchführung 2 direkt mit einem Flanschelement 55 eingebaut werden (das baugleich zu dem Flanschelement 5 ist). Ferner können baugleiche Durchführungen 2 auch mit unterschiedlichen Flanschkörpern 3 kombiniert werden, die sich bspw. in der Größe ihres Flanschabschnitts 45 unterscheiden und damit für unterschiedliche Flächendichtungen 52 optimiert sein können.

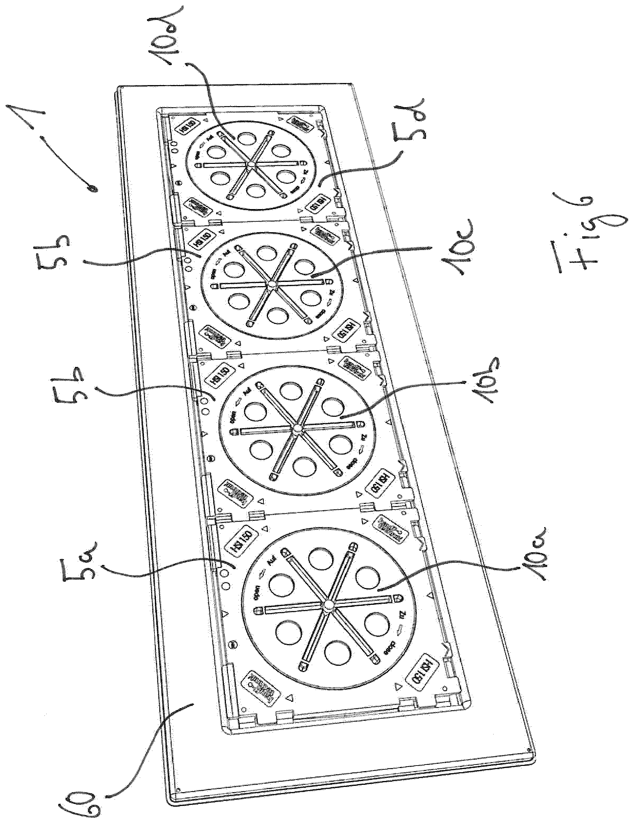

**Figur 6** zeigt eine weitere Durchführungsanordnung 1. Diese weist ebenfalls einen Flanschkörper 60 auf, mit dem jedoch vorliegend insgesamt vier Durchführungen 2 zusammengefasst sind. In der Ansicht gemäß Figur 6 sind deren Flanschelemente 5a-d zu erkennen, in die Rohrelemente ist jeweils ein Verschlussdeckel 10a-d gesetzt. Die Durchführungen sind baugleich zu jener der vorstehend diskutierten Durchführungsanordnung 1 aufgebaut, es wird insbesondere auf die Detaildiskussion anhand von Figur 2 verwiesen.

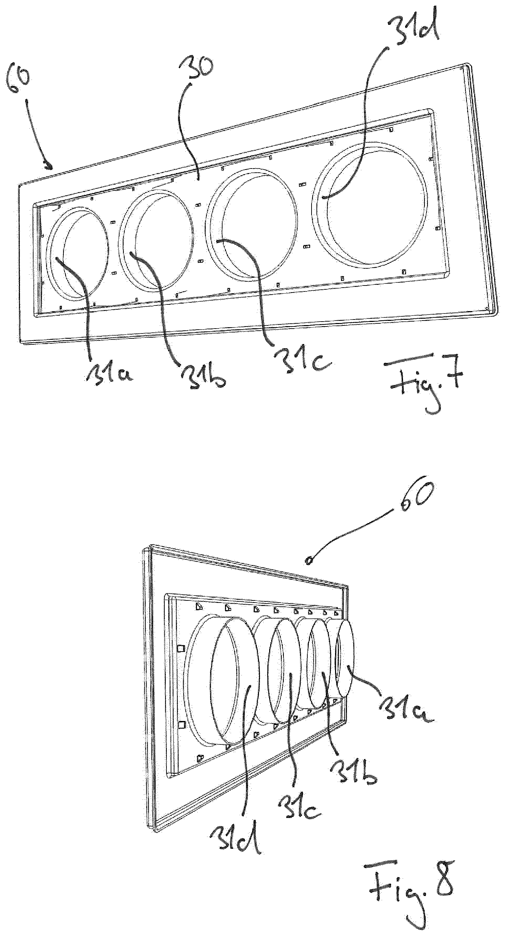

Die Durchführungen sind in der Anordnung 1 gemäß Figur 6 über ihre Flanschelemente 5a-d miteinander verbunden. Dazu sind, wie aus Figur 2 ersichtlich, an jedem Flanschelement 5 jeweils mehrere, zueinander komplementäre Formschlusselemente 20a, b vorgesehen. Die derart miteinander verbundenen Flanschelemente 5a-d sind in einer axialen Vertiefung 30 des Flanschkörpers 60 aufgenommen, vergleiche Figur 7 zur Illustration.

Wie aus **Figur 7** ferner ersichtlich, ist auch der Flanschköper 60 mit Rohrstutzen 31a-d geformt, jeder davon nimmt ein Rohrelement 4 der jeweiligen Durchführung 2 auf. Analog der vorstehenden Schilderung ist dort auch jeweils eine Klebeverbindung ausgebildet.

**Figur 8** zeigt den Flanschköper 60 in einer Rückansicht. Dies lässt die Profilierung des Thermoformteils analog der Darstellung gemäß Figur 4 erkennen. Diese Profilierung erlaubt trotz der Größe des Flanschköpers 60 und seiner zugleich dünnwandigen Ausgestaltung eine gute Stabilität.

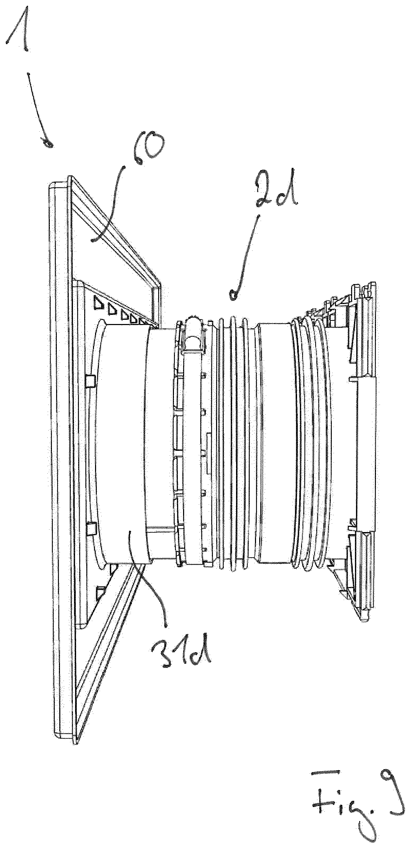

**Figur 9** zeigt die Durchführungsanordnung 1 gemäß Figur 6 in einer Seitenansicht, so wie sie zwischen zwei Schalungselementen in einer Betonwand vergossen wird.

## Patentansprüche

1. Durchführungsanordnung (1) zum Einbau in ein Wand- oder Bodenelement (50), die
eine Durchführung (2) mit
einem Rohrelement (4) zum Hindurchführen einer Leitung, und einem an dem Rohrelement (4) vorgesehen Flanschelement (5), das sich in zu einer Mittenachse (6) des Rohrelements (4) senkrechten Abstandsrichtungen (7) nach außen von diesem weg erhebt,
und einen Flanschkörper (3, 60) aufweist,
wobei der Flanschkörper (3, 60) an das Flanschelement (5) angesetzt ist, und der Flanschkörper (3, 60) eine Vertiefung (30) mit axialer Erstreckung bildet, in welcher das Flanschelement (5) der Durchführung (2) angeordnet ist,
wobei die Vertiefung (30) in dem Flanschkörper (3, 60) in einer Axialrichtung offen ist, welche von dem Rohrelement (4) der Durchführung (2) weg weist, und das Flanschelement (5) aus der von dem Rohrelement (4) weg weisenden Axialrichtung kommend in die Vertiefung (30) eingesetzt ist, und wobei ferner der Flanschkörper (3, 60) das Flanschelement (5) nach außen, also bezogen auf die Abstandsrichtungen (7) überragt,
und wobei der Flanschkörper (3, 60) zur Versteifung in einem achsparallelen Schnitt betrachtet profiliert geformt ist.

2. Durchführungsanordnung (1) nach Anspruch 1, bei welcher der Flanschkörper (3, 60) ein aus Kunststoff vorgesehenes Thermoformteil ist.

3. Durchführungsanordnung (1) nach Anspruch 1 oder 2, bei welcher der Flanschkörper (3, 60) einen Rohrstutzen (31) aufweist, wobei der Rohrstutzen (31) des Flanschkörpers (3, 60) und das Rohrelement (4) der Durchführung (2) ineinander gesetzt sind.

4. Durchführungsanordnung (1) nach einem der vorstehenden Ansprüche, bei welcher der Flanschkörper (3, 60) und die Durchführung (2) über eine Fügeverbindung miteinander verbunden und gegeneinander gedichtet sind.

5. Durchführungsanordnung (1) nach Anspruch 3 und 4, bei welcher die Fügeverbindung zwischen dem Rohrstutzen (31) des Flanschkörpers (3, 60) und dem Rohrelement (4) der Durchführung (2) ausgebildet ist.

6. Durchführungsanordnung (1) nach einem der vorstehenden Ansprüche, bei welcher das Flanschelement (5) der Durchführung (2) solchermaßen in der Vertiefung (30) in dem Flanschkörper (3, 60) sitzt, dass eine Stirnseitenfläche (5.1) des Flanschelements (5) axial bündig mit einer Stirnseitenfläche (40.1) eines Flanschabschnitts (45) des Flanschkörpers (3) liegt.

7. Durchführungsanordnung (1) nach einem der vorstehenden Ansprüche, bei welcher ein Außenrand (41) des Flanschkörpers (3, 60) gegenüber einer Stirnseitenfläche (40.1) eines Flanschabschnitts (45) des Flanschkörpers (3) axial zurückspringt und auskragt.

8. Durchführungsanordnung (1) nach einem der vorstehenden Ansprüche, mit einer weiteren Durchführung, die ein Rohrelement mit einem daran vorgesehenen Flanschelement (5b, c, d)aufweist, wobei die Durchführungen nebeneinander gesetzt sind, also die Flanschelemente (5a-d)in Abstandsrichtung (7) nebeneinander angeordnet sind, und wobei der Flanschkörper (60) die Flanschelemente (5a-d) gemeinsam einfasst, also axial betrachtet nach außen überragt.

9. Durchführungsanordnung (1) nach einem der vorstehenden Ansprüche, bei welcher das Flanschelement (5) der Durchführung (2) ein Formschlusselement (20a, b) aufweist, über welches die Durchführung (2) mit einer weiteren Durchführung formschlüssig zusammenbaubar ist.

10. Durchführungsanordnung (1) nach den Ansprüchen 8 und 9, bei welcher die Flanschelemente, welche der Flanschkörper (3) gemeinsam einfasst, über Formschlusselemente (20a, b) formschlüssig zusammengebaut sind.

11. Satz mit einer Mehrzahl Durchführungsanordnungen (1) nach einem der vorstehenden Ansprüche, wobei
die Durchführungen (2) der Durchführungsanordnungen (1) untereinander baugleich sind,
jedoch die Flanschkörper (3) der Durchführungsanordnungen (1) unterschiedlich geformt sind.

12. Verwendung einer Durchführungsanordnung (1) nach einem der Ansprüche 1 bis 10 oder eines Satzes nach Anspruch 11 zum Einbau in ein Wand- oder Bodenelement (50).

13. Verwendung nach Anspruch 12, wobei auf eine Seitenfläche (50.1) des Wand- oder Bodenelements (50) eine Flächenabdichtung (52) aufgebracht wird, die umlaufend an den Flanschkörper (3, 60) angearbeitet wird.

## Claims

1. Feed-through arrangement (1) for installation in a wall or floor element (50), comprising a feed-through (2) with
a pipe element (4) for passing a line therethrough, and
a flange element (5) provided at the pipe element (4) and extending outwardly away from the pipe element (4) in spacing directions (7) perpendicular to a central axis (6) of the pipe element (4),
and a flange body (3, 60),
wherein the flange body (3, 60) is attached to the flange element (5), and the flange body (3, 60) forms a recess (30) with axial extension, in which the flange element (5) of the feed-through (2) is arranged,
wherein the recess (30) in the flange body (3, 60) is open in an axial direction facing away from the pipe element (4) of the feed-through (2), and the flange element (5) coming from the axial direction facing away from the pipe element (4) is inserted into the recess (30),
and wherein further the flange body (3, 60) projects outwardly beyond the flange element (5), namely with respect to the spacing directions (7),
and wherein the flange body (3, 60) is profiled for stiffening when viewed in an axis-parallel section.

2. Feed-through arrangement (1) according to claim 1, wherein the flange body (3, 60) is a thermoformed part provided of plastic.

3. Feed-through arrangement (1) according to claim 1 or 2, in which the flange body (3, 60) comprises a pipe socket (31), the pipe socket (31) of the flange body (3, 60) and the pipe element (4) of the feed-through (2) being placed one inside the other.

4. Feed-through arrangement (1) according to one of the preceding claims, in which the flange body (3, 60) and the feed-through (2) are connected to one another via a joint connection and are sealed against one another.

5. Feed-through arrangement (1) according to claims 3 and 4, wherein the joint connection is formed between the pipe socket (31) of the flange body (3, 60) and the pipe element (4) of the feed-through (2).

6. Feed-through arrangement (1) according to one of the preceding claims, wherein the flange element (5) of the feed-through (2) is seated in the recess (30) in the flange body (3, 60) in such a way that a front side surface (5.1) of the flange element (5) lies axially flush with a front side surface (40.1) of a flange portion (45) of the flange body (3).

7. Feed-through arrangement (1) according to one of the preceding claims, wherein an outer edge (41) of the flange body (3, 60) is axially recessed with respect to a front side surface (40.1) of the flange portion (45) of the flange body (3) and projects.

8. Feed-through arrangement (1) according to one of the preceding claims, comprising a further feed-through which has a pipe element with a flange element (5b, c, d) provided thereat, wherein the feed-throughs are set next to one another, namely the flange elements (5a-d) are arranged next to one another in the spacing direction (7), and the flange body (60) jointly encloses the flange elements (5a-d), protruding outwardly when viewed axially.

9. Feed-through arrangement (1) according to one of the preceding claims, wherein the flange element (5) of the feed-through (2) comprises a form-fitting element (20a,b), via which the feed-through (2) is mountable with a further feed-through in a form-fitting manner.

10. Feed-through arrangement (1) according to claims 8 and 9, wherein the flange elements which the flange body (3) jointly encloses are assembled in a form-fitting manner via form-fitting elements (20a, b).

11. Set comprising a plurality of feed-through arrangements (1) according to one of the preceding claims, wherein
the feed-throughs (2) of the feed-through arrangements (1) are identical in construction to each other,
but the flange bodies (3) of the feed-through arrangements (1) are shaped differently.

12. Use of a feed-through arrangement (1) according to any one of claims 1 to 10 or of a set according to claim 11 for installation in a wall or floor element (50).

13. Use according to claim 12, wherein a surface seal (52) is applied to a side surface (50.1) of the wall or floor element (50), which is applied circumferentially onto the flange body (3, 60).

## Revendications

1. Dispositif de traversée (1) pour le montage dans un élément de paroi ou de sol (50), comprenant
une traversée (2) avec
un élément de tuyau (4) pour le passage d'une conduite ou d'un câble, et un élément de bride (5) prévu sur l'élément de tuyau (4), qui s'étend dans des directions d'écartement (7) perpendiculaires à un axe central (6) de l'élément de tuyau (4) vers l'extérieur de celui-ci
et un corps de bride (3, 60),
le corps de bride (3, 60) étant placé sur l'élément de bride (5), et le corps de bride (3, 60) formant un renfoncement (30) avec une extension axiale, dans lequel l'élément de bride (5) de la traversée (2) est disposé,
l'enfoncement (30) dans le corps de bride (3, 60) étant ouvert dans une direction axiale qui s'éloigne de l'élément de tuyau (4) de la traversée (2), et l'élément de bride (5) est inséré dans le renfoncement (30) en venant de la direction axiale opposée à l'élément de tuyau (4),
et dans lequel, en outre, le corps de bride (3, 60) dépasse l'élément de bride (5) vers l'extérieur, c'est-à-dire par rapport aux directions d'écartement (7),
et dans lequel le corps de bride (3, 60) est formé de manière profilée, vu en coupe parallèle à l'axe, pour un renforcement.

2. Dispositif de traversée (1) selon la revendication 1, dans lequel le corps de bride (3, 60) est une pièce thermoformée prévue en matière plastique.

3. Dispositif de traversée (1) selon la revendication 1 ou 2, dans lequel le corps de bride (3, 60) présente un embout tubulaire (31), l'embout tubulaire (31) du corps de bride (3, 60) et l'élément de tuyau (4) de la traversée (2) étant placés l'un dans l'autre.

4. Dispositif de traversée (1) selon l'une des revendications précédentes, dans lequel le corps de bride (3, 60) et la traversée (2) sont reliés entre eux par un raccord de jonction et sont étanches l'un par rapport à l'autre.

5. Dispositif de traversée (1) selon les revendications 3 et 4, dans lequel le raccord de jonction est disposé entre l'embout tubulaire (31) du corps de bride (3, 60) et de l'élément de tuyau (4) de la traversée (2).

6. Dispositif de traversée (1) selon l'une des revendications précédentes, dans lequel l'élément de bride (5) de la traversée (2) est logé dans l'enfoncement (30) dans le corps de bride (3, 60) de telle sorte qu'une surface latérale frontale (5.1) de l'élément de bride (5) est axialement à fleur d'une surface latérale frontale (40.1) d'une section de bride (45) du corps de bride (3).

7. Dispositif de traversée (1) selon l'une des revendications précédentes, dans lequel un bord extérieur (41) du corps de bride (3, 60) recule axialement et dépasse de la surface latérale frontale (40.1) de la section de bride (45) du corps de bride (3).

8. Dispositif de traversée (1) selon l'une des revendications précédentes, avec une traversée supplémentaire, qui comprend un élément de tuyau avec un élément de bride (5b, c, d) prévu sur celui-ci, les traversées étant placées l'une à côté de l'autre, c'est-à-dire que les éléments de bride (5a-d) sont disposés l'un à côté de l'autre dans le sens de l'écartement (7), et le corps de bride (60) enserre communément les éléments de bride (5a-d), s'est-à-dire qu'il dépasse axialement ver l'extérieur.

9. Dispositif de traversée (1) selon l'une des revendications précédentes, dans lequel l'élément de bride (5) de la traversée (2) comprend un élément de liaison de forme (20a,b), via lequel la traversée (2) peut être assemblée par complémentarité de forme avec une autre traversée.

10. Dispositif de traversée (1) selon les revendications 8 et 9, dans lequel les éléments de bride, que le corps de bride (3) enserre communément, sont assemblés par complémentarité de forme via les éléments de liaison de forme (20a, b)

11. Ensemble comprenant une pluralité de dispositifs de traversée (1) selon l'une des revendications précédentes, dans lequel
les traversées (2) des dispositifs de traversée (1) sont de construction identique entre elles,
mais les corps de bride (3) des dispositifs de traversée (1) ont des formes différentes entre eux.

12. Utilisation d'un dispositif de traversée (1) selon l'une quelconque des revendications 1 à 10 ou d'un ensemble selon la revendication 11 pour le montage dans un élément de paroi ou de sol (50).

13. Utilisation selon la revendication 12, dans laquelle un joint d'étanchéité de surface (52) est appliqué sur une surface latérale (50.1) de l'élément de paroi ou de sol (50), le joint d'étanchéité étant mis en place sur le pourtour du corps de bride (3, 60).
